# EUROPÄISCHE PATENTSCHRIFT

(11) **EP 3 695 893 B1**
(45) Veröffentlichungstag und Bekanntmachung des Hinweises auf die Patenterteilung: **07.06.2023**
(21) Anmeldenummer: 19208905.0
(22) Anmeldetag: 13.11.2019
(51) Int. Cl.: B01D 29/23, B01D 29/58, B01D 36/00

(54) **FILTERVORRICHTUNG**
FILTER DEVICE
DISPOSITIF FILTRANT

(30) Priorität: 15.02.2019 DE 102019001126
(43) Veröffentlichungstag der Anmeldung: 19.08.2020
(73) Patentinhaber: Hydac Fluidcarecenter GmbH, 66280 Sulzbach/Saar (DE)
(72) Erfinder: Koch, Edwin, 66636 Tholey (DE); Lang, Timo, 66540 Neunkirchen (DE); Adam, Christian, 66539 Neunkirchen (DE); Müller, Daniel, 66539 Neunkirchen (DE)
(74) Vertreter: Bartels und Partner, Patentanwälte

(56) Entgegenhaltungen:
- WO-A1-2018/229639
- DE-T5-112016 002 154
- US-A- 3 165 470
- US-A- 3 199 676

## Beschreibung

Die Erfindung betrifft eine Filtervorrichtung zum Abscheiden von Wasser aus Fluiden, wie Ölen oder Kraftstoff, mit den Merkmalen im Oberbegriff von Anspruch 1.

Bei Anlagen, in denen Fluide, wie Hydraulik- oder Schmieröle oder Kraftstoffe, zum Einsatz kommen, führen Wassereinlagerungen regelmäßig zu Problemen. Neben der durch Wasserbestandteile verursachten Korrosion wirken sich Wassereinlagerungen unter anderem auch negativ auf das Schmierverhalten eingesetzter Öle aus. Die Folge sind eine erhöhte Maschinenbeanspruchung und dadurch bedingte kürzere Wartungsintervalle und hieraus resultierend erhöhte Instandhaltungskosten. Im Hinblick auf diese Problematik ist es Stand der Technik, Filtervorrichtungen einzusetzen, die eine Wasserabscheidung mittels Koaleszenz ermöglichen. Sofern hier der Effekt der Koaleszenz angesprochen ist, meint dies das Zusammenfließen von kleinen Partikeln zu großen Partikeln, also von kleinen Wassertröpfchen zu großen Wassertropfen oder von kleinen Öltröpfchen zu großen Öltropfen.

DE 10 2014 012 094 A1 offenbart eine beispielhafte Filtervorrichtung. Zum Auftrennen eines mit einem Flüssigkeitsanteil verunreinigten Fluidgemisches sieht die bekannte Vorrichtung mehrere Abscheidestufen vor, wobei ein Zyklonabscheider, der durch Zentrifugalkraftwirkung den schwereren Flüssigkeitsanteil vom Gasanteil des Fluidgemisches abtrennt, einem Koaleszenzfilter vorgeschaltet ist, in dem eine Feinabtrennung koaleszierender Flüssigkeit, wie Wasser, stattfindet. Aufgrund des Vorhandenseins mehrerer Abscheidestufen, einschließlich eines Zyklonabscheiders, ist die bekannte Vorrichtung baulich aufwendig und besitzt einen hohen Platzbedarf.

Eine Filtervorrichtung der eingangs genannten Art ist aus US 9 718 011 B2 bekannt. Bei bisherigen Systemen zur Wasser-Öl-Abscheidung ist der Einsatz von Separatorelementen, welche die koaleszierten Wassertropfen in einem zusätzlichen Schritt aus dem Öl abtrennen, an sich bekannt. Durch die bei der Filtervorrichtung aus US 9 718 011 B2 vorgesehene Zusammenfassung von koaleszierendem Filtermaterial und Separatorelement in einem gemeinsamen Filterelement ist eine bauraumsparende sowie kostengünstige Ausgestaltung realisierbar. Trotz des Verzichts auf mehrere dem Koaleszenzfilter vorgeschaltete Abscheidestufen, einschließlich Zyklonabscheider, wie in DE 10 2014 012 094 A1 aufgezeigt, ist durch den Einsatz des integrierten Separatorelements eine hohe Effizienz der Wasserabscheidung erreichbar.

Hinsichtlich einer unerwünschten Vermischung von Fluid und Wasser nach Durchströmen des Filterelements lassen die bekannten Lösungen zum Abscheiden von Wasser aus Fluiden, wie Ölen oder Kraftstoff, noch Wünsche offen. Die Wirksamkeit der Abscheidung ist durch eine nachträgliche Vermischung von Fluid und Wasser mitunter stark reduziert.

Die US 3 165 470 beschreibt eine Filtervorrichtung zum Abscheiden von Wasser aus Fluiden, wie Ölen oder Kraftstoff, mit mindestens einem Filterelement, dessen Filtermaterial koaleszierende Eigenschaften, vorzugsweise mindestens eine Koaleszenzlage, aufweist und sich zwischen mindestens zwei gemeinsamen Endkappen erstreckt, und über dessen, gesehen in Aufstellrichtung, untere Endkappe Wasser über mindestens eine Wasser-Austrittsöffnung aus dem Filterelement abführbar ist; und einem Filtergehäuse, in dem das mindestens eine Filterelement aufgenommen ist und dem über eine im Zentralbereich offene Endkappe ein zu trennendes Fluid-Wasser-Gemisch zuführbar ist, wobei das Filtergehäuse in mindestens drei voneinander räumlich getrennte Funktionsräume unterteilt ist, von denen ein Fluideintrittsraum dem Zulauf des zu trennenden Fluid-Wasser-Gemisches als Unfiltrat dient, das von innen nach außen das mindestens eine Filterelement durchströmt, wobei das mindestens eine Filterelement von einem Fluidsammelraum für das abgereinigte Fluid umgeben ist und über die jeweilige Wasser-Austrittsöffnung fluidführend mit einem Wassersammelraum für das abgetrennte Wasser verbunden ist, wobei das Filtergehäuse über mindestens einen Unfiltrateinlass für das zu trennende Fluid-Wasser-Gemisch und über mindestens einen Filtratauslass für das abgereinigte Fluid verfügt, wobei eine obere Trennwand und eine untere Trennwand zur Unterteilung des Filtergehäuses in die mindestens drei Funktionsräume vorgesehen sind; wobei das Filtergehäuse die obere Trennwand und die untere Trennwand aufweist, zwischen denen sich das mindestens eine Filterelement in Aufstellrichtung erstreckt, wobei die obere Trennwand mit dem Filtergehäuse den Fluideintrittsraum für das zu trennende Fluid-Wasser-Gemisch begrenzt und mindestens eine Öffnung aufweist für eine Fluidverbindung vom Fluideintrittsraum über die im Zentralbereich offene obere Endkappe zum Innenraum des Filterelements, und wobei die untere Trennwand mit dem Filtergehäuse den Wassersammelraum für das abgetrennte Wasser begrenzt und mindestens eine Durchtrittsöffnung aufweist für eine Fluidverbindung vom Filterelement über die jeweilige Wasser-Austrittsöffnung an der unteren Endkappe zum Wassersammelraum.

Weitere Filtervorrichtungen gehen aus der WO 2018/229639 A1 und der DE 11 2016 002 154 T5 hervor.

Im Hinblick auf diese Problematik stellt sich die Erfindung die Aufgabe, eine Filtervorrichtung zur Verfügung zu stellen, bei der eine unerwünschte Vermischung von Fluid und Wasser nach Durchströmen des Filterelements wirksam vermieden ist.

Erfindungsgemäß ist diese Aufgabe gelöst durch eine Filtervorrichtung, die die Merkmale des Patentanspruchs 1 in seiner Gesamtheit aufweist. Vorteilhafte Ausgestaltungen der Erfindung sind Gegenstand der Unteransprüche.

Eine erfindungsgemäße Filtervorrichtung zeichnet sich dadurch aus, dass die untere Trennwand mindestens eine weitere Durchtrittsöffnung als Mittel für den Übertritt von Fluid aus dem Wassersammelraum in den koaxial zum Filterelement angeordneten Fluidsammelraum für das nach Durchströmen des Filtermaterials abgereinigte Fluid aufweist.

Es ist ferner vorgesehen, dass das Filtergehäuse in mindestens drei voneinander räumlich getrennte Funktionsräume unterteilt ist, von denen ein Fluideintrittsraum dem Zulauf des zu trennenden Fluid-Wasser-Gemisches als Unfiltrat dient, das von innen nach außen das mindestens eine Filterelement durchströmt, und dass das mindestens eine Filterelement von einem Fluidsammelraum für das abgereinigte Fluid umgeben ist und über die jeweilige Wasser-Austrittsöffnung fluidführend mit einem Wassersammelraum für das abgetrennte Wasser verbunden ist.

Die Unterteilung des Filtergehäuses ist in mehrere Funktionsräume, einen Fluideintrittsraum, einen Wassersammelraum und einen Fluidsammelraum. Durch diese Ausgestaltung wird eine unerwünschte Vermischung von Fluid und Wasser nach Durchströmen des Filterelements wirksam vermieden. Durch die Anordnung von Sammelräumen für Wasser und Fluid sowie von Durchtrittsöffnungen in entsprechenden Baukomponenten des Filtergehäuses sind prozessoptimierte Strömungswege für die beim Durchströmen des Filterelements voneinander getrennten Bestandteile, wie Öl und Wasser, definiert.

Die mindestens eine Trennwand ist zur Unterteilung des Filtergehäuses in die mindestens drei Funktionsräume vorgesehen. Die Trennwand kann mit einer geringen Wandstärke, kleiner oder gleich der Wandstärke des Filtergehäuses, ausgebildet sein und auf diese Weise eine bauraumsparende Ausgestaltung einer erfindungsgemäß ausgestalteten Filtervorrichtung ermöglichen. Es ist jedoch auch vorstellbar, die Endkappen des Filterelements derart auszugestalten, dass diese in radialer Richtung über das Filterelement überstehen zur räumlichen Trennung von zwei, in Aufstellrichtung gesehen, nebeneinander liegenden Funktionsräumen, oder die Endkappen in jeweils eine Trennwand zu integrieren.

Mittel für einen Übertritt von Fluid aus dem Wassersammelraum in den koaxial zum mindestens einen Filterelement angeordneten Fluidsammelraum sind für das nach Durchströmen des Filtermaterials abgereinigte Fluid vorgesehen. Hierdurch ist ein Übertritt von unerwünschtem Fluid im abgetrennten Wasser in den zugehörigen Fluidsammelraum ermöglicht. In dieser Ausgestaltung kann eine etwaige Ungenauigkeit beim Auftrennen des Fluid-Wasser-Gemisches nachträglich korrigiert und das im abgetrennten Wasser unerwünschte Fluid in den zugehörigen Fluidsammelraum gelangen.

Bei einer bevorzugten Ausführungsform der erfindungsgemäßen Filtervorrichtung ist das Filterelement im Filtergehäuse senkrecht angeordnet und erstreckt sich zwischen den beiden Trennwänden in senkrechter Aufstellrichtung, und die beiden Trennwände sind in waagerecht ausgerichteten Ebenen liegend angeordnet. Hieraus ergibt sich der Vorteil einer bestmöglichen Funktionsweise der erfindungsgemäßen Filtervorrichtung im Hinblick auf ein Unterbinden einer unerwünschten Vermischung von Wasser und Fluid nach Durchströmen des Filtermaterials. Durch die waagerecht ausgerichtete untere Trennwand können etwaige Fluidanteile schnellstmöglich über die jeweilige weitere Durchtrittsöffnung den Fluidsammelraum erreichen.

Der von den beiden Trennwänden begrenzte Fluidsammelraum bildet die Filtratseite des Filterelements innerhalb des Filtergehäuses aus, das über mindestens einen Filtratauslass verfügt. Das vom Wasser abgereinigte Fluid, wie Öl oder Kraftstoff, ist an dem mindestens einen Filtratauslass aus dem Filtergehäuse ableitbar und steht unmittelbar für eine Verwendung bereit. Vorzugsweise ist die erfindungsgemäße Filtervorrichtung Teil einer hydraulischen Anlage oder eines Fluidkreislaufs, wie eines Schmierkreislaufs.

Der von der oberen Trennwand begrenzte Fluideintrittsraum zusammen mit dem vorzugsweise hohlzylindrischen Innenraum des Filterelements die Unfiltratseite des Filterelements ausbildet, und dass das Filtergehäuse über mindestens einen Unfiltrateinlass verfügt. In entsprechender Weise ist ein Wasserauslass am Filtergehäuse vorgesehen, über den das im Wassersammelraum gesammelte Wasser aus dem Filtergehäuse abgeleitet werden kann. Durch den Filtratauslass, den Filtrateinlass und den Wasserauslass sind Fluid- und Strömungswege im Filtergehäuse, das in mehrere Funktionsräume unterteilt ist, festgelegt. Je nach Einbauort und Einsatz der erfindungsgemäßen Filtervorrichtung sind die Anzahl und die Anordnung der Ein- und Auslässe für das abzureinigende Fluid-Wasser-Gemisch und die voneinander getrennten Teile am Filtergehäuse gewählt.

Bei einer bevorzugten Ausführungsform umfasst ein, vorzugsweise zylindrisches Separatorelement das Filtermaterial unter Bildung eines zwischenliegenden Freiraums, der das Absinken der gebildeten Wassertropfen begünstigt.

Mit besonderem Vorteil kann die Anordnung hierbei so getroffen sein, dass der Freiraum bodenseitig in einen Sammelraum der unteren Endkappe mündet, die vorzugsweise eine Mehrzahl von Wasser-Austrittsöffnungen aufweist, die an den Sammelraum angeschlossen sind.

Mit Vorteil kann die untere Endkappe derart ausgestaltet sein, dass der Sammelraum der Endkappe von zwei Kappenteilen mit begrenzt ist, von denen das innere Kappenteil das Filtermaterial und das äußere Kappenteil das Separatorelement endseitig aufnimmt.

Bei vorteilhaften Ausführungsbeispielen weist das Koaleszenzelement des Filtermaterials ein sterngefaltetes, mehrlagiges Filtermaterial auf, das außenumfangsseitig von einem Drainageteil umfasst ist. Dieses hat sowohl die Funktion einer Lagefixierung des sterngefalteten, mehrlagigen Filtermaterials als auch die Funktion einer Strömungsleitung der abgeschiedenen Wassertröpfchen.

Bei einer bevorzugten Ausführungsform der erfindungsgemäßen Filtervorrichtung besitzt das Filtermaterial, in der Durchströmungsrichtung gesehen, den folgenden Lagenaufbau: Polyamidnetz, Polyestervlieslage, zwei Glasfaserlagen, Polyestervlieslage und Polyamidnetz. Die eingesetzten Polyamidnetze bilden ein Stützmaterial, um die Formstabilität der gefalteten Glasfasermatten zu gewährleisten. Der erfindungsgemäß hierbei vorgesehene Meshpack-Aufbau gewährleistet optimale Koaleszenz- und Durchströmungseigenschaften. Durch die Polyestervlieslagen wird ein Eindringen der Glasfasermaterialien bei steigendem Druck aufgrund zunehmenden Volumenstroms in das Stützgewebe verhindert. Auf diese Weise ist eine Beeinträchtigung des Koaleszenzelements sowie der Filtrationseigenschaften im laufenden Betrieb weitestgehend unterbunden.

Bei einer weiteren bevorzugen Ausführungsform sind die Glasfasern der Glasfaserlagen mit einer hydrophoben Beschichtung versehen, die elektrostatischen Aufladungen während der Filtration entgegenwirkt.

Besonders bevorzugt besteht das Drainageteil aus einem thermisch und mechanisch verfestigten Vlies, das vorzugsweise zu 100 % aus PET-Fasern gebildet ist. Das Vlies ist vorzugsweise bindemittelfrei hergestellt und progressiv von einer feinen Struktur zu einer gröberen Struktur hin aufgebaut. Die Funktion der Drainagelage besteht darin, die Strömungsgeschwindigkeit der Wasser-Öl-Emulsion zu reduzieren, um ein Anwachsen der Wassertropfen aufgrund der Anlagerung an den PET-Fasern zu ermöglichen. Erreicht wird dies durch die im Vergleich zum meshpackartigen Aufbau des Filtermaterials offenere Materialstruktur. Hierdurch nimmt die Fließgeschwindigkeit der Wassertropfen ab und eine Koaleszenz an den Drainagefasern ist erreicht.

Mit Vorteil ist die Anordnung so getroffen, dass das Separatorelement, ausgehend von dem Freiraum, ein Stützrohr, eine Sperrlage und eine Außenhülse aufweist.

Bei vorteilhaften Ausführungsbeispielen ist das Stützrohr des Separatorelements aus einem Gitter gebildet und durchgreift den Freiraum zumindest teilweise, wobei die Gitteröffnungen des Gitters Bestandteil des Freiraums sind.

Bevorzugt ist die Sperrlage des Separatorelements hydrophob ausgestaltet und bewirkt eine Ableitung der Wassertropfen zur Endkappe hin. Eine Diffusion der Tropfen und ein zugehöriger Reentrainmenteffekt sind auf diese Weise wirksam unterbunden. Hieraus folgt eine sehr effiziente Abreinigung des Wassers aus dem Öl-Wasser-Gemisch.

Die Außenhülse des Separatorelements, die aus einem Kunststoffmantel besteht, der eine Perforation in Form von oval ausgebildeten Durchlassstellen aufweist, hat die Funktion einer weiteren Abstützung nach außen. Die ovale Form der Durchlassstellen, welche vorzugsweise als Lochungen im Kunststoffmantel ausgebildet sind, gewährleistet eine optimierte, turbulenzreduzierte Öldurchströmung nach außen.

Nachstehend ist die Erfindung anhand von in der Zeichnung dargestellten Ausführungsbeispielen im Einzelnen erläutert. Es zeigen:
- Fig. 1a: einen Längsschnitt durch ein erstes Ausführungsbeispiel der erfindungsgemäßen Filtervorrichtung;
- Fig. 1b eine: Draufsicht auf das erste Ausführungsbeispiel der Filtervorrichtung von Fig. 1a;
- Fig. 1c: einen gegenüber Fig. 1a vergrößert gezeichneten Teilausschnitt der unteren Endkappe des Filterelements der Filtervorrichtung;
- Fig. 1d: eine Seitenansicht des ersten Ausführungsbeispiels der Filtervorrichtung;
- Fig. 2: eine perspektivische Darstellung des ersten Ausführungsbeispiels, wobei die Anordnung von Baukomponenten innerhalb des Filtergehäuses schematisiert veranschaulicht ist;
- Fig. 3a: einen Längsschnitt durch ein zweites Ausführungsbeispiel der erfindungsgemäßen Filtervorrichtung;
- Fig. 3b: eine Seitenansicht des zweiten Ausführungsbeispiels;
- Fig. 4: eine perspektivische Darstellung des zweiten Ausführungsbeispiels der Filtervorrichtung, wobei die Anordnung von Baukomponenten innerhalb des Filtergehäuses schematisiert veranschaulicht ist;
- Fig. 5a: eine Seitenansicht eines in einer erfindungsgemäßen Filtervorrichtung eingesetzten Filterelements, das entlang der Längsachse R im Wesentlichen rotationssymmetrisch ausgebildet ist;
- Fig. 5b: einen Längsschnitt durch das Filterelement von Fig. 5a entlang deren Querschnittsebene H-H;
- Fig. 6: einen vergrößert gezeichneten Teilausschnitt des an die untere Endkappe des Filterelements angrenzenden Bereichs;
- Fig. 7: einen gegenüber Fig. 6 weiter vergrößert gezeichneten Teilausschnitt des Separatorelements von Fig. 6;
- Fig. 8: einen Längsschnitt durch das äußere Kappenteil der unteren Endkappe;
- Fig. 9: eine perspektivische Darstellung von schräg unten auf die Unterseite des Kappenteils von Fig. 8; und
- Fig. 10: eine perspektivische Darstellung von schräg unten auf die Unterseite des inneren Kappenteils der unteren Endkappe des Filterelements.

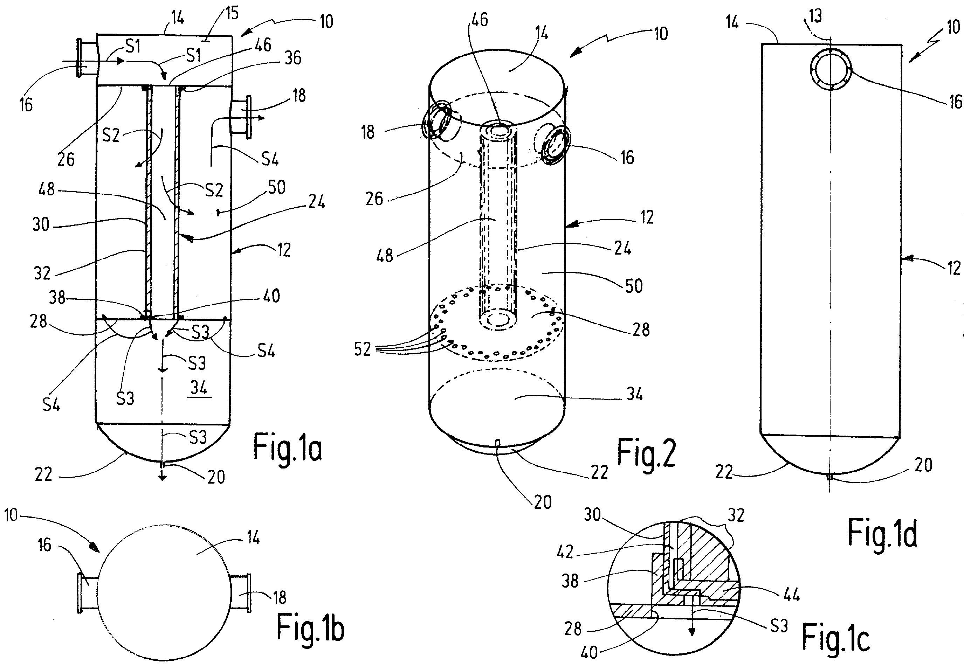

Die Fig. 1a zeigt im Längsschnitt ein als Ganzes mit 10 bezeichnetes erstes Ausführungsbeispiel der erfindungsgemäßen Filtervorrichtung, die ein im Wesentlichen zylinderförmiges Filtergehäuse 12 aufweist. Dieses ist am oberen Ende durch ein Deckelteil 14 geschlossen, unter dem sich ein Fluideintrittsraum 15 befindet. Dieser ist vom darunterliegenden Teil des Filtergehäuses 12 durch eine in einer waagerecht ausgerichteten Ebene liegende obere Trennwand 26 abgetrennt, in der sich eine zentrale, zur senkrechten Aufstellrichtung 13 (vgl. Fig. 1d) konzentrische Durchtrittsöffnung 46 befindet. Die axiale Höhe des Fluideintrittsraums 15 beträgt etwa 1/6 der Höhe des Filtergehäuses 12.

An der Seitenwand des Fluideintrittsraums 15 befindet sich ein Fluideinlass 16 für die Zufuhr von Unfiltrat. Weiter befindet sich in der Gehäusewand in zum Fluideinlass 16 diametral gelegener Anordnung ein Filtratauslass 18. Das Filtergehäuse 12 ist am unteren Ende durch ein gewölbtes Bodenteil 22 abgeschlossen, an dessen unterem Ende sich ein Wasserauslass 20 befindet. Zwischen der oberen Trennwand 26 und einer zu dieser parallelen unteren Trennwand 28 erstreckt sich ein hohlzylinderförmiges Filterelement 24. Die Erstreckung des Filterelements 24 in Aufstellrichtung 13 und dementsprechend der Abstand zwischen den beiden Trennwänden 26, 28 beträgt etwa die Hälfte der Gesamthöhe des Filtergehäuses 12. Die jeweilige Trennwand 26, 28 erstreckt sich in der Aufstellrichtung 13 gesehen quer zu derselben, also quer zur Längsachse der Vorrichtung, und schließt randseitig, vorzugsweise bündig, mit der Innenwand des Filtergehäuses 12 ab.

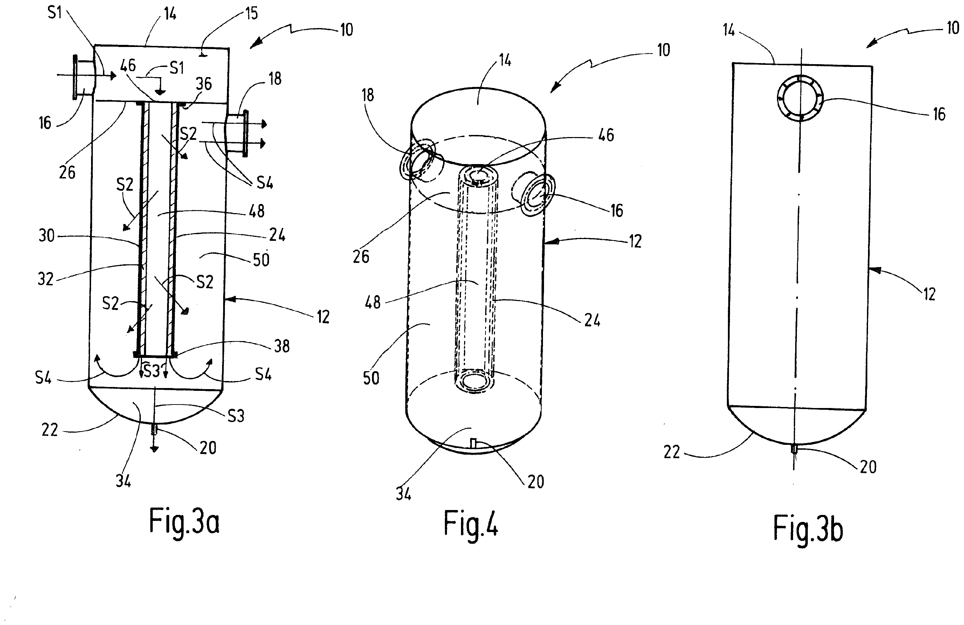

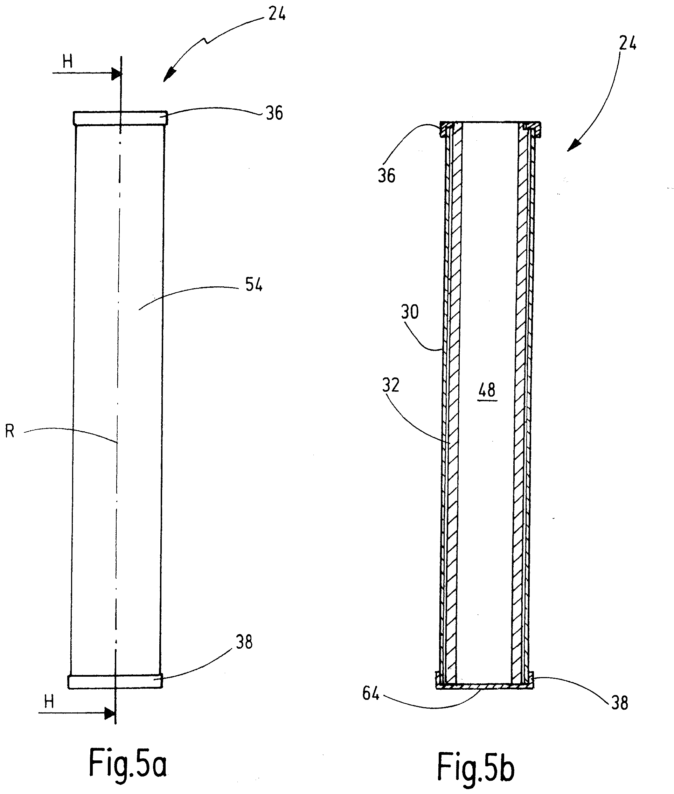

Der zwischen der unteren Trennwand 28 und dem Wasserauslass 20 befindliche Teilraum des Filtergehäuses 12 bildet einen Wassersammelraum 34 als Funktionsraum. Das Filterelement 24 weist zwischen einer oberen Endkappe 36 und einer unteren Endkappe 38 ein hohlzylinderförmiges Filtermaterial 32 sowie ein dieses außenseitig umgebendes Separatorelement 30 auf. Die obere Endkappe 36, die an der oberen Trennwand 26 festgelegt ist, ist im Zentralbereich offen, so dass über die Durchtrittsöffnung 46 der oberen Trennwand 26 der Fluidweg vom Fluideintrittsraum 15 zum Filterinnenraum 48 des Filterelements 24 frei ist, wie mit Strömungspfeilen S1 angedeutet ist. Die untere Trennwand 28 weist, wie die obere Trennwand 26, eine zentrale Durchtrittsöffnung 40 (vgl. Fig. 1c) auf, in die die untere Endkappe 38 eingesetzt ist. Der Aufbau der unteren Endkappe 38 und des zwischen den Endkappen 36, 38 verlaufenden Filtermaterials 32 und des Separatorelements 30 ist mit Bezug auf die Fig. 5 bis 10 näher erläutert. Während beim ersten Ausführungsbeispiel, s. Fig. 1a und 1c, die untere Trennwand 28 bis auf die Durchtrittsöffnung 40 geschlossen ist, ist bei einem zweiten Ausführungsbeispiel, das in Fig. 2 dargestellt ist, in der unteren Trennwand 28 eine Reihe weiterer Durchtrittsöffnungen 52 durch Lochungen ausgebildet. Im Übrigen entspricht das zweite Ausführungsbeispiel dem ersten Ausführungsbeispiel. Das in den Fig. 3a, 3b und 4 gezeigte dritte Ausführungsbeispiel sieht keine untere Trennwand 28 vor und weist eine gegenüber den anderen Ausführungsbeispielen verkürzte Länge des Filtergehäuses 12 auf, so dass die Erstreckung des Wassersammelraums 34 in Aufstellrichtung 13 kleiner ist.

Beim zweiten Ausführungsbeispiel von Fig. 3a bis 4 entfällt die untere Trennwand 28. Der Wassersammelraum 34 und der Fluidsammelraum 50 sind ohne bauliche Trennung voneinander separiert und dort unerwünschtes Fluid gelangt aufgrund seiner niedrigeren Dichte gegenüber der Dichte von Wasser in den Fluidsammelraum 50. Denkbar ist, hier eine semipermeable Membran (nicht gezeigt) anzuordnen als Trennelement zwischen den beiden Funktionsräumen 34, 50 und als Mittel für einen Übertritt vom Fluid aus dem Wassersammelraum 34 in den Fluidsammelraum 50. Im Übrigen entspricht die Funktionsweise des zweiten Ausführungsbeispiels der Funktionsweise des ersten Ausführungsbeispiels.

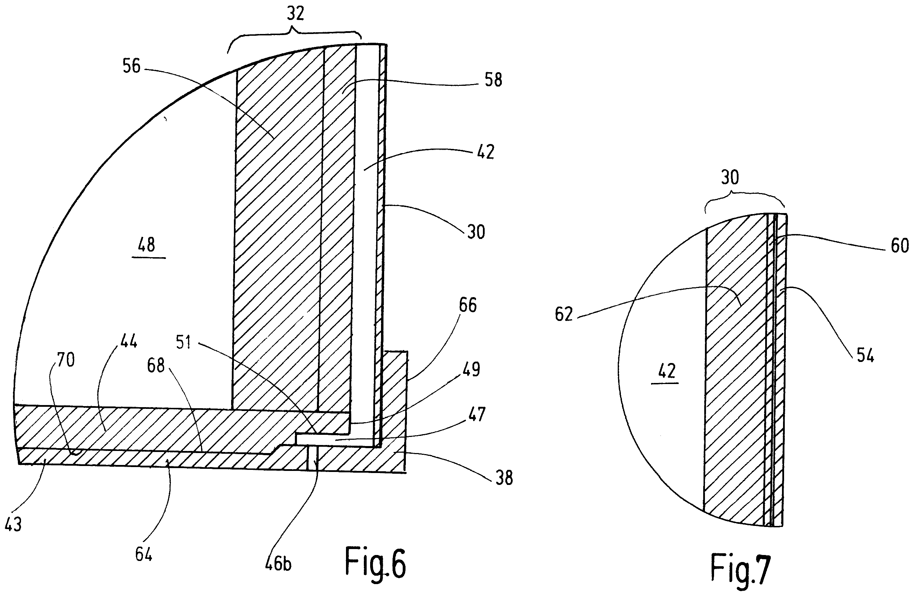

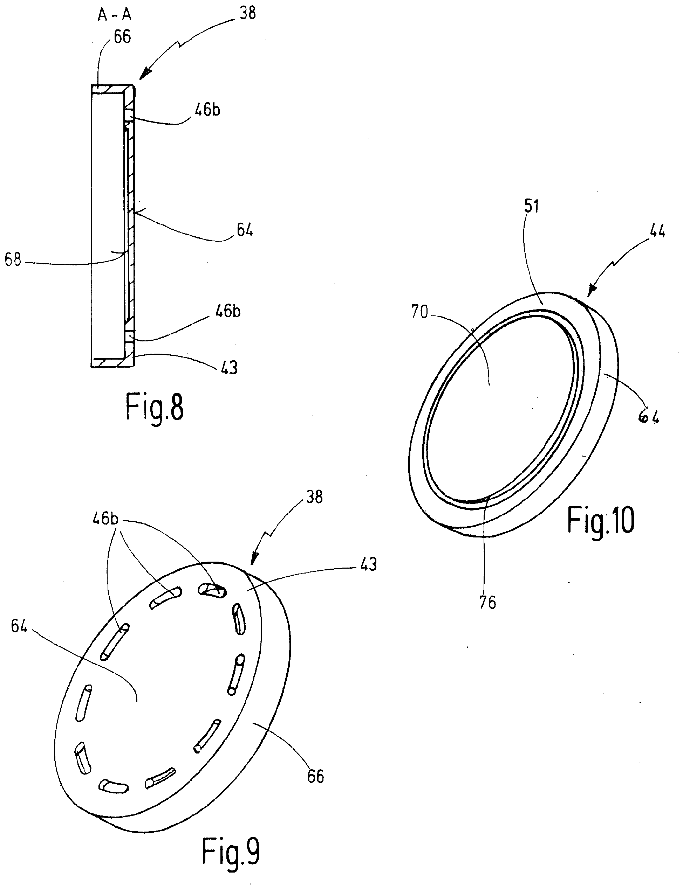

Die Fig. 5a und 5b zeigen in gesonderter Darstellung das Filterelement 24 mit zwischen den Endkappen 36 und 38 verlaufendem Filtermaterial 32 und außenseitigem Separatorelement 30. Während die obere Endkappe 36 im Zentralbereich offen ist, ist die untere Endkappe 38 bis auf die schlitzförmigen Austrittsöffnungen 46b geschlossen, die, wie am deutlichsten in Fig. 8 und 9 gezeigt ist, in einem äußeren Kappenteil 43 der Endkappe 38 ausgebildet sind und sich in der Nähe des hochgezogenen Umfangsrandes 66 entlang einer Kreislinie erstrecken. Die Wasser-Austrittsöffnungen 46b bilden Wasseraustrittsstellen am Filterelement 24 aus. Wie Fig. 1c und 6 zeigen, befindet sich innerhalb des äußeren Kappenteils 43 ein inneres Kappenteil 44, das in Fig. 10 gesondert dargestellt und durch eine Kreisscheibe gebildet ist, deren Durchmesser geringer ist als der Durchmesser des äußeren Kappenteils 43, so dass zwischen dessen Umfangsrand 66 und dem Außenumfang 49 (vgl. Fig. 6) des inneren Kappenteils 44 ein Ringraum freibleibt.

In dem an den Außenumfang 49 anschließenden Randbereich 51 ist die Wandstärke des inneren Kappenteils 44 verringert, so dass unterhalb des Randbereichs 51 ein Wassersammelraum 47 gebildet ist, der sich radial nach innen über die Wasser-Austrittsöffnungen 46b erstreckt, so dass in der unteren Endkappe 38 ein Wasseraustritt möglich ist. Wie ebenfalls die Fig. 6 am deutlichsten zeigt, bildet die Oberseite des inneren Kappenteils 44 die Anlagefläche für das stirnseitige Ende des Filtermaterials 32. Das Separatorelement 30 schließt endseitig am hochgestellten Umfangsrand 66 des äußeren Kappenteils 43 an, wobei zwischen dem Filtermaterial 32 und dem Separatorelement 30 ein Freiraum 42 frei bleibt. Dieser geht in der Endkappe 38 in den Ringraum am Außenumfang 49 des inneren Kappenteils 44 über und ist dadurch mit dem Wassersammelraum 47 in Verbindung, der zu den Wasser-Austrittsöffnungen 46b führt.

Die Fig. 6 und 7 zeigen nähere Einzelheiten des Filtermaterials 32 und des Separatorelements 30. Das hohlzylinderförmige Filtermaterial 32 weist ein Koaleszenzelement 56 und ein dieses umfassendes Drainageteil 58 auf. Das Koaleszenzelement 56 ist durch ein mehrlagiges, sterngefaltetes Meshpack gebildet, das, gesehen in der vom Filterinnenraum 48 nach außen verlaufenden Durchströmungsrichtung, ein Polyamidnetz, eine Polyestervlieslage, zwei Glasfaserlagen, eine Polyestervlieslage und ein Polyamidnetz aufweist, wobei die Glasfaserlagen mit einer hydrophoben Beschichtung versehen sind. Das Drainageteil 58 besteht aus einem thermisch und mechanisch verfestigten Vlies, das vorzugsweise zu 100 % aus PET-Fasern gebildet ist. Von dem Freiraum 42 ausgehend weist das Separatorelement 30 ein Stützrohr 62, eine Sperrlage 60 und eine Außenhülse 54 auf. Das aus einem Gitter gebildete Stützrohr 62 kann eine solche Wandstärke besitzen, dass es den Freiraum 42 teilweise durchgreift, so dass die Gitteröffnungen Bestandteil des Freiraums 42 sind oder diesen zur Gänze bilden. Die Sperrlage 60 des Separatorelements 30 ist hydrophob ausgestaltet. Die Außenhülse 54, die aus einem Kunststoffmantel besteht, weist für den Filtratdurchtritt eine Perforation mit oval ausgebildeten Durchlassstellen auf. Wie die Fig. 6 und 9 zeigen, ist das äußere Kappenteil 43 der Endkappe 38 am Kappenboden 64 bis auf die Wasser-Austrittsöffnungen 46b geschlossen. Innenseitig weist der Kappenboden 64 eine Vertiefung 68 als Sitz für die an einer ringförmigen Stufe 76 (vgl. Fig. 10) vorspringende Außenfläche 70 des inneren Kappenteils 44 auf. Der Freiraum 42 kann auch mit einer wasserführenden Schicht, Schüttung oder einer Fülllage verfüllt sein oder eben frei bleiben. Er stellt insoweit einen radialen Abstand zwischen dem Filtermaterial und Separatorelement 30 her.

Im Betrieb tritt das Unfiltrat über den Einlass 16, wie mit Pfeilen S1 in Fig. 1a angedeutet, in den Filterinnenraum 48 ein, durchströmt beim Filtriervorgang das Filterelement 24 von innen nach außen, vgl. Pfeile S2, und gelangt zum Fluidsammelraum 50, der sich zwischen der oberen 26 und der unteren Trennwand 28 erstreckt. Aus dem Fluidsammelraum 50 tritt das Filtrat, wie mit Pfeilen S4 angedeutet, über den Filtratauslass 18 aus. Das durch Koaleszenz abgeschiedene Wasser gelangt aus dem Freiraum 42 zwischen Filtermaterial 32 und Separatorelement 30 zum in der Endkappe 38 befindlichen Sammelraum 47 und tritt über die Wasser-Austrittsöffnungen 46b der Endkappe 38 aus und gelangt, wie mit Pfeilen S3 angedeutet, zum unteren Wassersammelraum 34, aus dem es über den Wasserauslass 20 ablassbar ist. Über Durchtrittsöffnungen 52 (vgl. Fig. 2) in der unteren Trennwand 28 ist beim ersten Ausführungsbeispiel ein Übertritt von Fluid aus dem Wassersammelraum 34 in den darüberliegenden Fluidsammelraum 50 möglich.

## Patentansprüche

1. Filtervorrichtung zum Abscheiden von Wasser aus Fluiden, wie Ölen oder Kraftstoff, mit
- mindestens einem Filterelement (24), dessen Filtermaterial (32) koaleszierende Eigenschaften, vorzugsweise mindestens eine Koaleszenzlage, aufweist und sich zwischen mindestens zwei gemeinsamen Endkappen (36, 38) erstreckt, und über dessen, gesehen in Aufstellrichtung (13), untere Endkappe (38) Wasser über mindestens eine Wasser-Austrittsöffnung (46b) aus dem Filterelement (24) abführbar ist; und
- einem Filtergehäuse (12), in dem das mindestens eine Filterelement (24) aufgenommen ist und dem über eine im Zentralbereich offene Endkappe (36) ein zu trennendes Fluid-Wasser-Gemisch zuführbar ist,
wobei das Filtergehäuse (12) in mindestens drei voneinander räumlich getrennte Funktionsräume (15, 34, 50) unterteilt ist, von denen ein Fluideintrittsraum (15) dem Zulauf des zu trennenden Fluid-Wasser-Gemisches als Unfiltrat dient, das von innen nach außen das mindestens eine Filterelement (24) durchströmt,
wobei das mindestens eine Filterelement (24) von einem Fluidsammelraum (50) für das abgereinigte Fluid umgeben ist und über die jeweilige Wasser-Austrittsöffnung (46b) fluidführend mit einem Wassersammelraum (34) für das abgetrennte Wasser verbunden ist,
wobei das Filtergehäuse (12) über mindestens einen Unfiltrateinlass (16) für das zu trennende Fluid-Wasser-Gemisch und über mindestens einen Filtratauslass (18) für das abgereinigte Fluid verfügt,
wobei eine obere Trennwand (26) und eine untere Trennwand (28) zur Unterteilung des Filtergehäuses (12) in die mindestens drei Funktionsräume (15, 34, 50) vorgesehen sind,
wobei das Filtergehäuse (12) die obere Trennwand (26) und die untere Trennwand (28) aufweist, zwischen denen sich das mindestens eine Filterelement (24) in Aufstellrichtung (13) erstreckt,
wobei die obere Trennwand (26) mit dem Filtergehäuse (12) den Fluideintrittsraum (15) für das zu trennende Fluid-Wasser-Gemisch begrenzt und mindestens eine Öffnung (46) aufweist für eine Fluidverbindung vom Fluideintrittsraum (15) über die im Zentralbereich offene obere Endkappe (36) zum Innenraum (48) des Filterelements (24), und
wobei die untere Trennwand (28) mit dem Filtergehäuse (12) den Wassersammelraum (34) für das abgetrennte Wasser begrenzt und mindestens eine Durchtrittsöffnung (40) aufweist für eine Fluidverbindung vom Filterelement (24) über die jeweilige Wasser-Austrittsöffnung (46b) an der unteren Endkappe (38) zum Wassersammelraum (34),
**dadurch gekennzeichnet, dass** die untere Trennwand (28) mindestens eine weitere Durchtrittsöffnung (52) als Mittel für den Übertritt von Fluid aus dem Wassersammelraum (34) in den koaxial zum Filterelement (24) angeordneten Fluidsammelraum (50) für das nach Durchströmen des Filtermaterials (32) abgereinigte Fluid aufweist.

2. Filtervorrichtung nach Anspruch 1, **dadurch gekennzeichnet, dass** das Filterelement (24) im Filtergehäuse (12) senkrecht angeordnet ist und sich zwischen den beiden Trennwänden (26, 28) in senkrechter Aufstellrichtung (13) erstreckt, und dass die beiden Trennwände (26, 28) in waagerecht ausgerichteten Ebenen liegend angeordnet sind.

3. Filtervorrichtung nach Anspruch 1 oder 2, **dadurch gekennzeichnet, dass** ein Separatorelement (30) das Filtermaterial (32) unter Bildung eines dazwischenliegenden Freiraums (42) umfasst.

4. Filtervorrichtung nach Anspruch 3, **dadurch gekennzeichnet, dass** der Freiraum (42) bodenseitig in einen Sammelraum (47) der unteren Endkappe (38) mündet, die die jeweilige Wasser-Austrittsöffnung (46b) aufweist, die an den Sammelraum (47) angeschlossen ist.

5. Filtervorrichtung nach Anspruch 3 oder 4, **dadurch gekennzeichnet, dass** der Sammelraum (47) der unteren Endkappe (38) von zwei Kappenteilen (38, 44) mit begrenzt ist, von denen das innere Kappenteil (44) das Filtermaterial (32) und das äußere Kappenteil (43) das Separatorelement (30) endseitig aufnimmt.

6. Filtervorrichtung nach einem der vorstehenden Ansprüche, **dadurch gekennzeichnet, dass** das Filtermaterial (32) ein Koaleszenzelement (56) aufweist, welches ein sterngefaltetes, mehrlagiges Filtermaterial aufweist, das außenumfangsseitig von einem Drainageteil (58) umfasst ist.

7. Filtervorrichtung nach einem der vorstehenden Ansprüche, **dadurch gekennzeichnet, dass** das Filtermaterial (32), in der Durchströmungsrichtung gesehen, den folgenden Lagenaufbau hat:
- Polyamidnetz;
- Polyestervlieslage;
- zwei Glasfaserlagen;
- Polyestervlieslage; und
- Polyamidnetz.

8. Filtervorrichtung nach Anspruch 7, **dadurch gekennzeichnet, dass** die Glasfaserlagen mit einer hydrophoben Beschichtung versehen sind, die elektrostatische Aufladung während der Filtration entgegenwirkt.

9. Filtervorrichtung nach einem der Ansprüche 6 und 7, 8, wenn die Ansprüche 7 und 8 von Anspruch 6 abhängig sind, **dadurch gekennzeichnet, dass** das Drainageteil (58) aus einem thermisch und mechanisch verfestigten Vlies besteht, das vorzugsweise zu 100 % aus PET-Fasern gebildet ist.

10. Filtervorrichtung nach einem der Ansprüche 3 bis 5 und 6 bis 9, wenn die Ansprüche 6 bis 9 von Anspruch 3 abhängig sind, **dadurch gekennzeichnet, dass** das Separatorelement (30), ausgehend von dem Freiraum (42), ein Stützrohr (62), eine Sperrlage (60) und eine Außenhülse (54) aufweist.

11. Filtervorrichtung nach Anspruch 10, **dadurch gekennzeichnet, dass** das Stützrohr (62) des Separatorelements (30) aus einem Gitter gebildet ist und den Freiraum (42) zumindest teilweise durchgreift, wobei die Gitteröffnungen des Gitters Bestandteil des Freiraums (42) sind.

12. Filtervorrichtung nach Anspruch 10 oder 11, **dadurch gekennzeichnet, dass** die Sperrlage (60) des Separatorelements (30) hydrophob ausgestaltet ist.

13. Filtervorrichtung nach einem der Ansprüche 10 bis 12, **dadurch gekennzeichnet, dass** die Außenhülse (54) des Separatorelements (30) aus einem Kunststoffmantel besteht, der eine Perforation in Form von oval ausgebildeten Durchlassstellen aufweist.

## Claims

1. Filter device for separating water from fluids, such as oils or fuel, having
- at least one filter element (24), the filter material (32) of which has coalescing properties, preferably having at least one coalescing layer and extending between at least two common end caps (36, 38), and via the lower end cap (38) of which, viewed in the installation direction (13), water can be discharged from the filter element (24) via at least one water outlet opening (46b); and
- a filter housing (12) in which the at least one filter element (24) is accommodated and which can be fed with a fluid-water mixture to be separated via an end cap (36) which is open in the central region,
wherein the filter housing (12) is divided into at least three functional chambers (15, 34, 50) which are spatially separated from each other, of which a fluid inlet chamber (15) serves for the inflow of the fluid-water mixture to be separated, as unfiltered medium, which flows through the at least one filter element (24) from inside to outside,
wherein the at least one filter element (24) is surrounded by a fluid collection chamber (50) for the cleaned fluid and is connected in a fluid-conducting manner via the respective water outlet opening (46b) to a water collection chamber (34) for the separated water,
wherein the filter housing (12) has at least one unfiltered medium inlet (16) for the fluid-water mixture to be separated and at least one filtrate outlet (18) for the cleaned fluid,
wherein an upper separating wall (26) and a lower separating wall (28) are provided for dividing the filter housing (12) into at least three functional chambers (15, 34, 50),
wherein the filter housing (12) comprises the upper separating wall (26) and the lower separating wall (28), between which the at least one filter element (24) extends in the installation direction (13),
wherein the upper separating wall (26) with the filter housing (12) defines the fluid inlet chamber (15) for the fluid-water mixture to be separated and has at least one opening (46) for a fluid connection from the fluid inlet chamber (15) via the end cap (36) which is open in the central region to the inner chamber (48) of the filter element (24), and
wherein the lower separating wall (28) with the filter housing (12) defines the water collection chamber (34) for the separated water and has at least one opening (40) for a fluid connection from the filter element (24) via the respective water outlet opening (46b) on the lower end cap (38) to the water collection chamber (34),
**characterised in that** the lower separating wall (28) has at least one further opening (52) as a means for transferring fluid from the water collection chamber (34) into the fluid collection chamber (50), which is arranged coaxially with the filter element (24), for the fluid cleaned after flowing through the filter material (32).

2. Filter device according to claim 1, **characterised in that** the filter element (24) is arranged vertically in the filter housing (12) and extends between the two separating walls (26, 28) in the vertical installation direction (13), and **in that** the two separating walls (26, 28) are arranged lying in horizontally aligned planes.

3. Filter device according to claim 1 or 2, **characterised in that** a separator element (30) encloses the filter material (32) forming a free space (42) therebetween.

4. Filter device according to claim 3, **characterised in that** the free space (42) opens at the bottom into a collecting space (47) of the lower end cap (38) which has the respective water outlet opening (46b) that is connected to the collecting space (47).

5. Filter device according to claim 3 or 4, **characterised in that** the collecting space (47) of the lower end cap (38) is co-bounded by two cap parts (38, 44), of which the inner cap part (44) accommodates the filter material (32) and the outer cap part (43) accommodates the separator element (30) at the end.

6. Filter device according to one of the preceding claims, **characterised in that** the filter material (32) has a coalescing element (56) which comprises a star-pleated, multi-layer filter material that is surrounded on the outer circumference by a drainage part (58).

7. Filter device according to one of the preceding claims, **characterised in that** the filter material (32), viewed in the direction of flow, has the following layer structure:
- polyamide mesh;
- polyester fleece layer;
- two layers of fibreglass;
- polyester fleece layer; and
- polyamide mesh.

8. Filter device according to claim 7, **characterised in that** the fibreglass layers are provided with a hydrophobic coating which counteracts electrostatic charging during filtration.

9. Filter device according to one of claims 6 and 7, 8, if claims 7 and 8 are dependent on claim 6, **characterised in that** the drainage part (58) consists of a thermally and mechanically bonded non-woven fabric which is preferably formed entirely of PET fibres.

10. Filter device according to one of claims 3 to 5 and 6 to 9, if claims 6 to 9 are dependent on claim 3, **characterised in that** the separator element (30), starting from the free space (42), comprises a supporting tube (62), a barrier layer (60) and an outer sleeve (54).

11. Filter device according to claim 10, **characterised in that** the supporting tube (62) of the separator element (30) is formed of a lattice and at least partially penetrates the free space (42), wherein the lattice openings of the lattice are part of the free space (42).

12. Filter device according to claim 10 or 11, **characterised in that** the barrier layer (60) of the separator element (30) is configured to be hydrophobic.

13. Filter device according to one of claims 10 to 12, **characterised in that** the outer sleeve (54) of the separator element (30) consists of a plastic sheath which is perforated in the form of oval-shaped passage points.

## Revendications

1. Dispositif de filtration pour séparer de l'eau de fluides, comme des huiles ou du carburant, comprenant
- au moins un élément (24) de filtre, dont la matière (32) filtrante a des propriétés de coalescence, de préférence au moins une couche de coalescence, et s'étend entre au moins deux coiffes (36, 38) d'extrémité communes, et, par sa coiffe (38) d'extrémité inférieure, considérée dans la direction (13) de montage debout, de l'eau peut être évacuée de l'élément (24) de filtre par au moins une ouverture (46b) de sortie d'eau ; et
- une enveloppe (12) de filtre, dans laquelle le au moins un élément (24) de filtre est reçu et à laquelle un mélange de fluide et d'eau à séparer peut être apporté par une coiffe (36) d'extrémité ouverte dans la partie centrale,
dans lequel l'enveloppe (12) de filtre est subdivisée en au moins trois espaces (15, 34, 50) fonctionnels séparés les uns des autres dans l'espace, dont un espace (15) d'entrée de fluide sert à l'apport comme non filtrat du mélange de fluide et d'eau à séparer, qui traverse le au moins un élément (24) de filtre de l'intérieur à l'extérieur,
dans lequel le au moins un élément (24) de filtre est entouré d'un espace (50) de collecte de fluide pour le fluide épuré et communique fluidiquement par l'ouverture (46b) respective de sortie d'eau avec un espace (34) de collecte d'eau pour l'eau séparée,
dans lequel l'enveloppe (12) du filtre dispose d'au moins une entrée (16) de non filtrat pour le mélange de fluide et d'eau à séparer et d'au moins une sortie (18) de filtrat pour le fluide épuré,
dans lequel une cloison (26) supérieure et une cloison (28) inférieure sont prévues pour la subdivision de l'enveloppe (12) du filtre en les au moins trois espaces (15, 34, 50) fonctionnels,
dans lequel l'enveloppe (12) du filtre comporte la cloison (26) supérieure et la cloison (28) inférieure entre lesquelles s'étend, dans la direction (13) de montage debout, le au moins un élément (24) de filtre,
dans lequel la cloison (26) supérieure délimite, avec l'enveloppe (12) du filtre, l'espace (15) d'entrée de fluide pour le mélange de fluide et d'eau à séparer et a au moins une ouverture (46) pour une communication fluidique de l'espace (15) d'entrée de fluide à l'espace (48) intérieur de l'élément (24) de filtre en passant par la coiffe (36) d'extrémité supérieure ouverte dans la partie centrale, et dans lequel la cloison (28) inférieure délimite, avec l'enveloppe (12) du filtre, l'espace (34) de collecte d'eau pour l'eau séparée et a au moins une ouverture (40) de passage pour une communication fluidique de l'élément (24) de fluide à l'espace (34) de collecte d'eau en passant par l'ouverture (46b) respective de sortie d'eau de la coiffe (38) d'extrémité inférieure,
**caractérisé en ce que** la cloison (28) inférieure a au moins une autre ouverture (52) de passage comme moyen pour le débordement de fluide de l'espace (34) de collecte d'eau dans l'espace (50) de collecte de fluide, disposée coaxialement à l'élément (24) de filtre, pour le fluide épuré après traversée de la matière (32) filtrante.

2. Dispositif de filtration suivant la revendication 1, **caractérisé en ce que** l'élément (24) de filtre est disposé verticalement dans l'enveloppe (12) du filtre et s'étend dans la direction (13) de montage debout verticale entre les deux cloisons (26, 28), et **en ce que** les deux cloisons (26, 28) sont disposées dans des plans dirigés horizontalement.

3. Dispositif de filtration suivant la revendication 1 ou 2, **caractérisé en ce qu'**un élément (30) séparateur entoure la matière (32) filtrante avec formation d'un espace (42) libre intermédiaire.

4. Dispositif de filtration suivant la revendication 3, **caractérisé en ce que** l'espace (42) libre débouche du côté du fond dans un espace (47) de collecte de la coiffe (38) d'extrémité inférieure, qui a l'ouverture (46b) respective de sortie d'eau, laquelle est raccordée à l'espace (47) de collecte.

5. Dispositif de filtration suivant la revendication 3 ou 4, **caractérisé en ce que** l'espace (47) de collecte de la coiffe (38) d'extrémité inférieure est délimité par deux parties (38, 44) de coiffe, dont la partie (44) de coiffe intérieure reçoit la matière (32) filtrante, et la partie (43) de coiffe extérieure reçoit, du côté de l'extrémité, l'élément (30) séparateur.

6. Dispositif de filtration suivant l'une des revendications précédentes, **caractérisé en ce que** la matière (32) filtrante a un élément (56) de coalescence, qui a une matière filtrante en plusieurs couches repliée en étoile, qui est entouré, du côté du pourtour extérieur, d'une partie (58) de drainage.

7. Dispositif de filtration suivant l'une des revendications précédentes, **caractérisé en ce que** la matière (32) filtrante a, dans le sens de traversée, la structure de couches suivantes :
- filet de polyamide ;
- couche de non tissé de polyester ;
- deux couches de fibre de verre ;
- couche de non tissé de polyester ; et
- filet de polyamide.

8. Dispositif de filtration suivant la revendication 7, **caractérisé en ce que** les couches de fibre de verre sont pourvues d'un revêtement hydrophobe, qui s'oppose à la charge électrostatique pendant la filtration.

9. Dispositif de filtration suivant l'une des revendications 6 et 7, 8, lorsque les revendications 7 et 8 dépendent de la revendication 6, **caractérisé en ce que** la partie (58) de drainage est constituée d'un non tissé consolidé thermiquement et mécaniquement, qui est formé, de préférence à 100 % de fibres de PET.

10. Dispositif de filtration suivant l'une des revendications 3 à 5 et 6 à 9, lorsque les revendications 6 à 9 dépendent de la revendication 3, **caractérisé en ce que** l'élément (30) séparateur a, en partant de l'espace (42) libre, un tube (62) d'appui, une couche (60) d'arrêt et un manchon (54) extérieur.

11. Dispositif de filtration suivant la revendication 10, **caractérisé en ce que** le tube (62) d'appui de l'élément (30) séparateur est formé d'une grille et pénètre au moins en partie dans l'espace (42) libre, les ouvertures de la grille étant une partie constitutive de l'espace (42) libre.

12. Dispositif de filtration suivant la revendication 10 ou 11, **caractérisé en ce que** la couche (60) d'arrêt de l'élément (30) séparateur est hydrophobe.

13. Dispositif de filtration suivant l'une des revendications 10 à 12, **caractérisé en ce que** le manchon (54) extérieur de l'élément (30) séparateur est constitué d'une enveloppe en matière plastique, qui a une perforation sous la forme de points de passage de constitution ovale.
